Europäisches Patentamt

European Patent Office

Office européen des brevets

(19)

(11) Veröffentlichungsnummer: **0 197 382**
**B1**

(12) **EUROPÄISCHE PATENTSCHRIFT**

(45) Veröffentlichungstag der Patentschrift:
14.06.89

(21) Anmeldenummer: 86103762.0

(22) Anmeldetag: 19.03.86

(51) Int. Cl.⁴: **F 16 K 11/18**, F 16 K 11/087,
F 16 K 31/58

(54) Grifflose Mischarmatur.

(30) Priorität: 03.04.85 DE 3512116
22.04.85 DE 3514488

(43) Veröffentlichungstag der Anmeldung:
15.10.86 Patentblatt 86/42

(45) Bekanntmachung des Hinweises auf die Patenterteilung:
14.06.89 Patentblatt 89/24

(84) Benannte Vertragsstaaten:
AT BE CH DE FR GB IT LI LU NL SE

(73) Patentinhaber: Holzer, Walter, Dipl.-Ing., Drosteweg 19,
D-7758 Meersburg (DE)

(72) Erfinder: Holzer, Walter, Dipl.-Ing., Drosteweg 19,
D-7758 Meersburg (DE)

(74) Vertreter: Riebling, Peter, Dr.-Ing., Patentanwalt Dr.-Ing.
P. Riebling Rennerie 10 Postfach 3160, D-8990 Lindau
(DE)

(56) Entgegenhaltungen:
EP-A- 0 117 199
WO-A-80/00739
DE-A- 1 775 077
DE-B- 1 650 500
DE-B- 1 914 694
DE-C- 922 687
DE-C- 1 007 255
DE-C- 1 172 913
FR-A- 2 135 884
US-A- 2 623 752
US-A- 3 167 086
US-A- 3 443 595
US-A- 3 726 318
US-A- 3 915 191

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Grifflose Mischarmaturen, bei denen durch Schwenken des Wasserauslaufes die Wassermenge bzw. die Temperatur des Mischwassers geregelt wird, sind einfach und übersichtlich zu bedienen. Meist geschieht die Regelung durch Schwenken um zwei Achsen, um beide Variablen zu verändern.

Bei einer Wasserarmatur der genannten Art gemäß der DE-B-1650500 wird die Wassermenge durch Verschwenken der Armatur um eine erste Achse erreicht, während die Wassertemperatur durch Verdrehen des Wasserauslaufs um eine zweite Achse verändert wird. Hierbei sind zylindrische Regelelemente vorgesehen, die jedoch getrennt voneinander angeordnet sind, so daß nachteilig ein erhöhter konstruktiver Aufwand erforderlich wird.

Die Aufgabe der vorliegenden Erfindung besteht darin, eine besonders einfache und materialgerechte Konstruktion anzugeben, welche sich auch besonders zur Herstellung in Kunststoff eignet.

Grundlage ist die Verwendung von Bauteilen mit, im wesentlichen zylindrischer Form, wahlweise mit etwas Konizität, um das Entformen zu erleichtern. Die Bauteile sollen dabei in einfacher Art nur ineinandergesteckt werden, um die Montage zu erleichtern und sich dabei gegenseitig in ihrer Lage sichern. Erreicht wird dies erfindungsgemäß dadurch, daß die, auf einer Seite geschlossenen Regelelemente, jeweils mit der offenen Seite in eine Öffnung des anderen Teiles eingesetzt werden.

So wird das erste Regelelement, welches der Wassermengenregelung dient, mit seiner offenen Seite in den Ventilkörper eingesetzt. Das zweite Regelelement, welches der Regelung des Querschnittverhältnisses von Kalt- und Warmwasser und damit der Regelung der Mischtemperatur des Wassers dient, wird seinerseits quer zur Achse des ersten Regelelementes in dieses eingesetzt, wobei es sich z.B. in einem Schlitz im Ventilkörper an diesem abstützt und ein Herausfallen des ersten Regelelementes aus dem Ventilkörper verhindert. Die Lage des zweiten Regelelementes wird seinerseits durch eine, z.B. einsteckbare Sicherung bestimmt.

Auf diese Weise sind alle drei Bauteile, nämlich der Ventilkörper, das erste Regelelement und das zweite Regelelement durch eine einzige einsteckbare Sicherung verbunden.

Wenn das zweite Regelelement starr mit dem schwenkbaren Wasserauslauf verbunden ist, und u.U. sogar ein einziges Bauteil darstellt, ist damit die Hauptmontage der Armatur beendet.

Eine weitere Verbesserung im Bedienungskomfort durch Anordnung eines Freiwinkels zwischen dem zweiten Regelelement und dem Wasserauslauf bei einer formschlüssigen Verbindung dieser Bauteile, ist mit sehr einfachen Mitteln erreichbar. Aufgabe eines solchen Freiwinkels ist es, eine gewisse Schwenkbewegung des Wasserauslaufes zu erlauben, ohne eine Funktionsänderung hervorzurufen. Bei einer starren Verbindung des Wasserauslaufes mit dem zweiten Regelelement hat jede Schwenkung auch eine Änderung der Mischtemperatur zur Folge. Demgemäß entspricht jede Schwenkstellung des Wasserauslaufes einem bestimmten Mischverhältnis, d.h. einer bestimmten Temperatur, z.B. links = kalt, rechts = heiß und in der Mittellage = warm.

Der Freiwinkel gestattet hingegen, z.B. zunächst durch ein Schwenken nach links «kalt» zu wählen, aber im Bereich des Freiwinkels wieder in die Mittellage zurückzuschwenken, um sich dort bequem die Hände zu waschen. Will man etwas wärmeres Wasser, so kann man durch kurzes Schwenken nach rechts, – durch ein «Antippen» – die Temperatur erhöhen aber ohne weiteres wieder in die Mittellage zurückkehren. Eine Federrückstellung in die Mittellage wäre ohne weiteres möglich, sie würde aber die freie Wahl der Stellung des Auslaufes eingrenzen.

Der einfache Aufbau einer erfindungsgemäßen Mischarmatur ermöglicht auch die Betätigung von weiteren Wasserabsperrungen ohne wesentlichen Aufwand. So wird vorgeschlagen im ersten Regelelement, welches der Wassermengenregelung dient, weitere Steueröffnungen vorzusehen, die wieder mit entsprechenden, korrespondierenden Gegenöffnungen im Ventilkörper teilweise oder ganz zur Deckung gebracht werden können.

Mit einer solchen zusätzlichen Regelung könnte z.B. die Wasserzufuhr zu anderen Verbrauchern, wie Geschirrspülmaschinen oder Waschmaschinen gesperrt werden. Diese Funktion ist außerordentlich begehrt, da diese Maschinen meist mit flexiblen Schläuchen angeschlossen sind, die nicht dauernd unter Druck stehen sollen. Die Gefahr des Platzens der Schläuche mit verheerenden Folgen ist groß, andererseits ist die Anordnung eines getrennten Absperrventiles aufwendig und oft schwer zugänglich.

Die Kombination der eigentlichen Wassermischarmatur mit solchen zusätzlichen Regelelementen ergibt eine vorteilhafte, übersichtliche Anordnung, insbesondere wenn diese dritten Regelelemente direkt im Ventilkörper mit der Kalt- oder Warmwasserzuleitung verbunden sind.

Eine weitere Verbesserung einer erfindungsgemäßen Mischarmatur besteht darin, z.B. für das erste Regelelement, welches die Wassermenge bestimmt, eine oder sogar mehrere gerastete Stellungen vorzusehen. Damit kann man beim Einschalten die Schwenkbewegung, z.B. in einer «Sparstellung» einrasten, in der nur etwa die halbe Wassermenge ausfließt. Will man mehr Wasser, kann man die Rast durch einen etwas stärkeren Druck überschwenken.

Eine solche Rast kann aber auch z.B. vor der Wasserabsperrung der Geschirrspülmaschine vorgesehen werden. In einer solchen Armatur wird zunächst, durch eine Schwenkbewegung bis zu einer Rast nach oben, der normale Wasserauslauf geschlossen, aber der Zulauf zur Geschirrspülmaschine bleibt offen. Erst bei weiterem Schwenken nach oben, über die Rast hinaus wird auch der Zulauf zur Maschine gesperrt.

Eine weitere Ausgestaltung der Erfindung ist die Kombination einer solchen grifflosen Armatur mit einem oder mehreren Regelelementen im gleichen Ventilkörper, die unabhängig von den übrigen Funktionen der Armatur, mit Betätigungsgriffen bedient werden.

Vorteilhafterweise werden solche unabhängigen Regelelemente direkt im Ventilkörper an die Kalt- oder Warmwasserzuleitung angeschlossen. Eine extrem einfache Anordnung besteht darin, auch die unabhängigen Regelelemente als drehbare Zylinder mit Öffnungen auszubilden, die wieder mit korrespondierenden Öffnungen im Ventilkörper durch Drehung zur Deckung gebracht werden können.

Eine erfindungsgemäße Konstruktionsvariante sieht vor, in einer einzigen durchgehenden Querbohrung im Ventilkörper, welche z. B. die Kaltwasserzuleitung anschneidet, von beiden Seiten ein solches unabhängiges Regelelement einzusetzen.

Auch bezüglich der erforderlichen Dichtungen (z. B. O-Ringe oder Lippendichtungen) wird eine wesentliche Verbesserung vorgeschlagen, die darin besteht, die Regelelemente in eine Spritzform einzulegen und die Dichtungen einzeln oder in Gruppen einzuspritzen. Die heutige Kunststofftechnik ist in der Lage, entsprechende Materialien anzubieten, besonders für derart einfache Bauelemente wie sie bei der erfindungsgemäßen Armatur benötigt werden, die praktisch keine Dichtungen mit Wasserdurchlauf, sondern nur Absperrdichtungen braucht.

Die Erfindung strebt an, den Herstellungsaufwand bei der Herstellung der Regelelemente zu erniedrigen. Die Erfindung strebt auch an, durch Verringerung der Bauteile und Mehrfachnutzung ihrer Funktionen nicht nur Kosten zu senken, sondern auch die Qualität und Zuverlässigkeit zu erhöhen.

Eine weitere Ausgestaltung einer solchen Mischarmatur besteht darin, eine Kugel als erstes Regelelement vorzusehen, wobei eine Drehung um eine erste Achse eine gleichsinnige Änderung und damit eine Mengenänderung des ausfließenden Wassers zufolge hat und die andere Regelfunktion einem getrennten, weiteren zylindrischen Regelelement übertragen wird, das beispielsweise innerhalb der Kugel angeordnet ist und mit dem Wasserauslauf verbunden ist.

Die Forderung, der Kugel bzw. dem Regelelement bestimmte Schwenk- und Drehbewegungen vorzuschreiben, gibt der Lagerung dieser Elemente besondere Bedeutung. Es wird vorgeschlagen, die Kugel in einem Gehäuse, möglichst direkt auf dem Ventilkörper zu lagern. Der als Einstellgriff gestaltete Wasserauslauf ragt durch einen Führungsschlitz, der etwa einem Großkreis der Kugel folgt, aus dem Gehäuse und ist durch diesen Schlitz derart geführt, daß sich die Kugel nur um eine erste Achse drehen kann. Ein Verdrehen des Einstellgriffes oder des Wasserauslaufs im Führungsschlitz bestimmt dann die Drehung der Kugel oder erfindungsgemäß des weiteren Regelelementes um die zweite Achse.

Die erforderlichen Drehbewegungen sind damit unabhängig voneinander möglich und bestimmt. Die Größe des Drehwinkels um die erste Achse ist durch die Länge des Führungsschlitzes gegeben. Für die Begrenzung des Drehwinkels um die zweite Achse sorgen Anschläge, die vorteilhafterweise im Bereich des Führungsschlitzes oder des Regelelementes angeordnet sind.

Als ein weiteres Beispiel unter vielen wäre die Anordnung eines zusätzlichen Absperrventils zu nennen, welches lediglich aus weiteren Öffnungen in der Kugel oder im Regelelement in Verbindung mit korrespondierenden Öffnungen im Ventilkörper bestehen kann.

Ein solches Absperrventil könnte die, besonders für Küchen-Mischarmaturen sehr begehrte Möglichkeit erfüllen, bei längerer Abwesenheit in der Urlaubszeit oder bei Reparaturen, in einfacher Weise den Wasserzulauf zu einer Geschirrspülmaschine oder zu einer Waschmaschine zu sperren. Im Normalfall wird dann der als Einstellgriff gestaltete Wasserauslauf nur im notwendigen Einstellbereich geschwenkt, hingegen zur Absperrung des Wasserzulaufes zu Küchenmaschinen, wird er in einen erweiterten Bereich geschwenkt.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Fig. 1 Schnitt durch eine grifflose Armatur in einer Vorderansicht;

Fig. 2 Schnitt durch die Armatur nach Fig. 1 in der Seitenansicht;

Fig. 3 und 4 Darstellung des Ventilkörpers vor dem Einsetzen des Regelelementes;

Fig. 5 Schnitt durch eine Variante einer Mischarmatur in Seitenansicht;

Fig. 6 ein im Vergleich zu Fig. 5 um 90 Grad gedrehter Schnitt durch die Mischarmatur;

Fig. 7 und 8 Darstellung des in den Wasserauslauf eingesteckten Regelelementes in zwei Ansichten;

Fig. 9 Schnitt durch eine weitere Ausführungsform eines Ventilkörpers;

Fig. 10 Seitenansicht der Mischarmatur mit dem Ventilkörper nach Fig. 9 und 11;

Fig. 11 gleiche Ausführung wie Fig. 9 in anderer Darstellung;

Fig. 12 Schnitt durch eine Mischarmatur in einer weiteren Ausführungsform mit einer Kugel als erstes Regelelement und mit einem weiteren zweiten zylindrischen Regelelement innerhalb der Kugel.

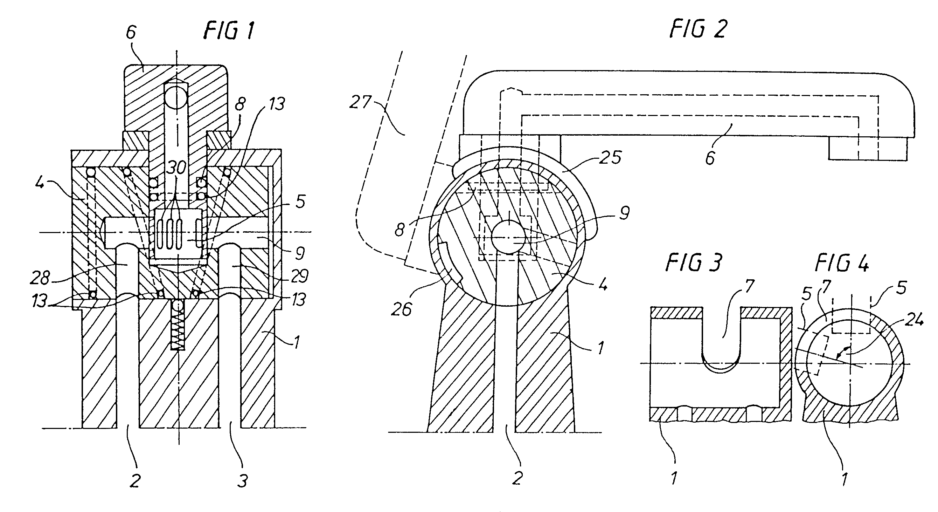

Fig. 1 und 2 stellen schematisch eine beispielsweise Konstruktion mit den Erfindungsmerkmalen dieser Patentanmeldung dar.

In den Ventilkörper (1) ist das zylindrische oder leicht kegelförmige erste Regelelement (4) eingesetzt, welches auf einer Seite geschlossen ist und nur von der anderen Seite ein zentrales Sackloch (9) aufweist, sowie radiale Bohrungen (28, 29) korrespondierend mit den Öffnungen für den Kalt-

und Warmwasserzulauf (2 und 3). Eine weitere radiale Bohrung ist für die Aufnahme des zweiten Regelelementes (5) bestimmt. In dem dargestellten Beispiel ist das zweite Regelelement (5) starr mit dem Wasserauslauf (6) verbunden.

Auch das zweite Regelelement (5) ist zylindrisch und nur an einem Ende offen. Das andere Ende mündet im Wasserauslauf.

Bei der Montage der Armatur muß daher lediglich das erste Regelelement (4) in den einseitig offenen Ventilkörper eingesetzt werden, sodann wird das zweite Regelelement (5) in die dafür vorgesehene Querbohrung des ersten Regelelementes (4) eingeschoben und die Sicherung (8) in das erste Regelelement (4) eingelegt. Die Fig. 3 und 4 zeigen den Ventilkörper (1) vor dem Einsetzen des ersten Regelelementes (4). Der Schlitz (7) nimmt das zweite Regelelement (5) auf, welches im eingesetzten Zustand gemäß Fig. 4 um einen Winkel (24) geschwenkt werden kann.

Fig. 1 und 2 zeigen die Armatur in voll geöffnetem Zustand, d.h. die Bohrungen (28 und 29) im ersten Regelelement (4) fluchten mit den Öffnungen für den Kalt- und Warmwasserzulauf (2 und 3) im Ventilkörper (1). Wird der Wasserauslauf (6) nach oben, in die in Fig. 2 gestrichelt dargestellte Lage (27) geschwenkt, so fluchten die Bohrungen (2 und 28 bzw. 3 und 29) nicht mehr und der Zulauf von Kalt- und Warmwasser ist unterbrochen. Bei hochwertiger Qualität der Oberflächenbearbeitung kann u.U. auf eine Dichtung verzichtet werden, jedoch ist es möglich, z.B. Runddichtungen (26) so in das erste Regelelement (4) einzulegen, daß sie in der Lage (27) des Wasserauslaufes (6) die Wasserzuleitung (2 und 3) verschließen.

Die Öffnungen (30), die je nach Schwenklage des Wasserauslaufes (6), mehr Kalt- oder mehr Warmwasser in das zweite Regelelement (5) eintreten lassen, müssen praktisch nie dicht abschließen, da sie den Bohrungen (28 und 29) nachgeordnet sind und keine Verschlußfunktion haben. Die Dichtungen (13) sind O-Ringe ohne Schaltfunktion, die nur die Aufgabe haben, das Austreten des Wassers nach außen zu verhindern.

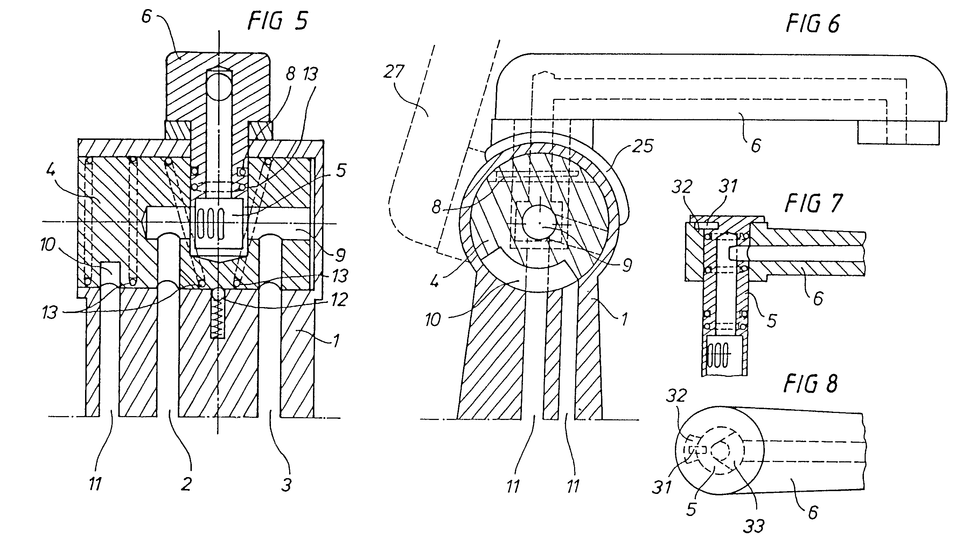

Fig. 7 und 8 zeigen schematisch eine Variante der Erfindung, bei der das zweite Regelelement (5) mit dem Wasserauslauf (6) formschlüssig, d.h. mit einem Freiwinkel verbunden ist.

Fig. 7 und 8 zeigen das zweite Regelelement (5) drehbar in den Wasserauslauf (6) eingesteckt. Der Mitnehmestift (31) des zweiten Regelelementes (5) liegt in einer segmentförmigen Aussparung (32) des Wasserauslaufes (6) und nimmt bei einer Schwenkbewegung erst nach einem Freiwinkel das zweite Regelelement (5) mit. Die im Winkel erweiterte Bohrung (33) gestattete einen ungehinderten Auslauf des Wassers vom zweiten Regelelement (5) in den Wasserauslauf (6). Der Freiwinkel gibt die Möglichkeit, einerseits mit dem Wasserauslauf (6) die Temperatur zu beeinflussen, aber trotzdem nach dem Einstellen der gewünschten Temperatur den Wasserauslauf (6) in die Mittellage zu drehen, ohne an der Temperatureinstellung etwas zu verändern.

Fig. 5 und 6 zeigen eine weitere der zahlreichen, erfindungsgemäßen Konstruktionsvarianten. In diesem schematisch dargestellten Beispiel ist die Betätigung eines weiteren, an sich unabhängigen Wasserlaufes gezeigt. Zu diesem Zweck ist im ersten Regelelement (4) eine weitere Steueröffnung (10) in Form eines Segmentes angeordnet, mit korrespondierenden Öffnungen (11) im Ventilkörper (1). Bei normalem Gebrauch der Armatur ist die Verbindung der beiden Öffnungen (11) dauernd offen. Erst wenn der Wasserauslauf in seine extreme Schwenklage (27) gedrückt wird, ist das Ende der segmentförmigen Steueröffnung (10) erreicht und die Verbindung gesperrt. Zweckmäßigerweise wird diese extreme Schwenklage (27) durch die bereits erwähnte Rast (12) blockiert, um eine unbeabsichtigte Unterbrechung des Wasserlaufes von den Öffnungen (10) zur Öffnung (11) zu vermeiden.

Diese zusätzliche Anordnung ist nur als Beispiel beschrieben, es wäre genausogut z.B. die Betätigung oder Sperrung eines Sprinklersystems oder ähnliches möglich.

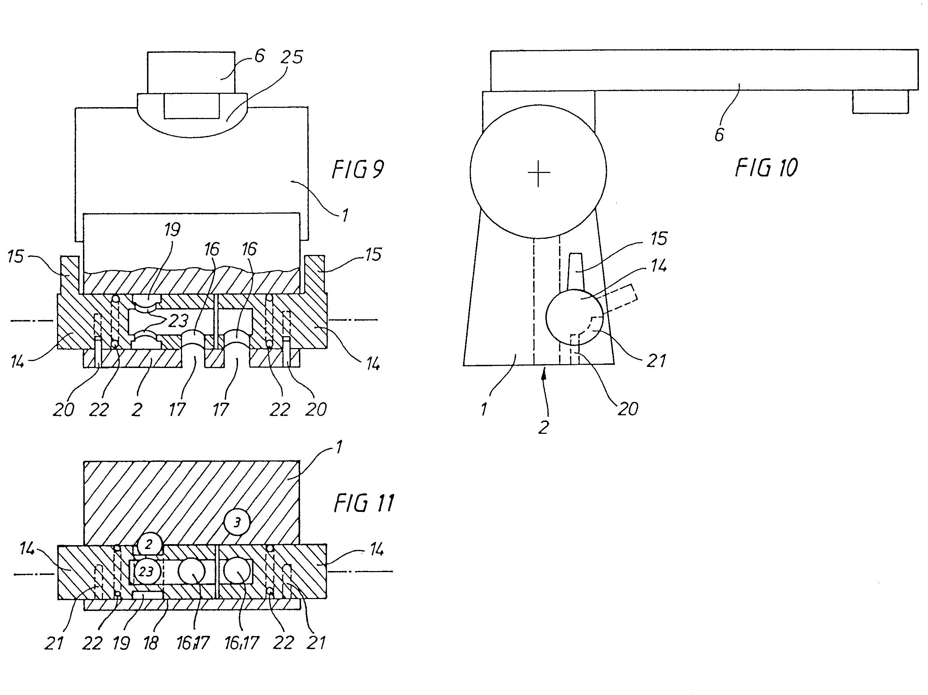

Fig. 9 bis 11 zeigen eine andere Erweiterung des Erfindungsgedankens, die sich organisch und einheitlich einordnet.

In diesem Beispiel sind im gleichen Ventilkörper (1) zwei unabhängige weitere zylindrische Regelelemente (14) mit ihren Betätigungsgriffen (15) angeordnet. Dabei sind wieder die Regelelemente (14) zylinderförmig und in einer durchgehenden Bohrung (18) im Ventilkörper (1) gelagert. Die Bohrung (18) schneidet die Kaltwasserzuleitung (2) direkt an.

Dadurch erhalten beide Regelelemente über die Ringnut (19) und die Querbohrung (23) Kaltwasser.

Die Öffnungen (16) korrespondieren mit den Öffnungen (17) im Ventilkörper (1) und gestatten dem Kaltwasser in der gezeigten Stellung der Regelelemente (14) den Durchfluß. Bei Schwenkung der Betätigungsgriffe (15) in die in Fig. 10 gestrichelt gezeichnete Lage, verhindert die Zylinderwandung der Regelelemente (14) den Wasseraustritt.

Die Regelelemente (14) werden von Anschlagstiften (20) in einer Segmentnut (21), die gleichzeitig die Drehbewegung begrenzt, fixiert. Die Dichtungsringe (22) verhindern das Austreten des Wassers nach außen.

Die angeführten Darstellungen des Erfindungsgedankens können nur als Beispiele ohne begrenzte Wirkung auf die zahlreichen weiteren Möglichkeiten verstanden werden. So gehört es beispielsweise zu den Ausgestaltungsmöglichkeiten, den Schlitz (7) nach Fig. 3, in dem das Regelelement (5) schwenkt, durch eine Abdeckung (25) zu verdecken.

Ebenso ist die Möglichkeit einige der auf annähernd gleichem Durchmesser sitzenden O-Ringe (13) durch ein gruppenweises Einspritzen zusammen mit den Runddichtungen (26), (wie in Fig. 2 dargestellt), zum Erfindungsgedanken zu zählen, da diese Möglichkeit erst durch die Besonderheiten dieser Konstruktion gegeben ist.

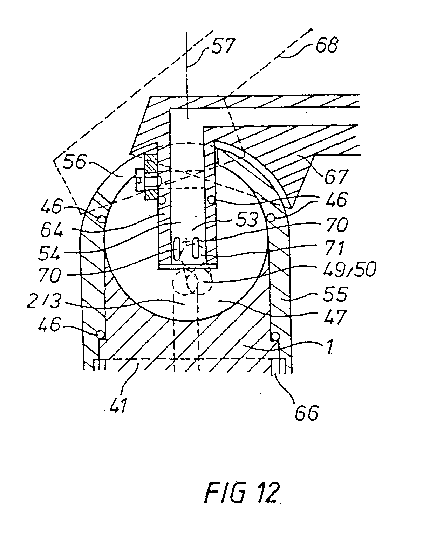

Bei dem folgenden Ausführungsbeispiel nach Fig. 12 ist das sonst zylindrische Regelelement (4) als Kugel (47) ausgebildet, wobei in der Kugel (47) als sonst zylindrisches Regelelement (5) nach den Fig. 1–8 ein ähnliches zylindrisches Regelelement (64) angeordnet ist.

Das wesentliche Element, die Kugel (47) ist in diesem Fall nach Fig. 12 in einem Gehäuse (55) eingeschlossen und direkt auf dem Ventilkörper (41) formschlüssig gelagert. Der Spannring (66) verbindet das Gehäuse (55) mit dem Ventilkörper (41).

Der Kaltwasserzulauf (2) und der Warmwasserzulauf (3) ist nach den Fig. 1–8 ausgebildet. Die Kugel (47) enthält die korrespondierenden Öffnungen (49 und 50), die in der Mischkammer (54) münden. Mit (46) sind die notwendigen O-Ring-Dichtungen bezeichneten.

Das Kaltwasser gelangt beim Schwenken der Kugel (47) um die Achse (53) durch den Kaltwasserzulauf (2) und die Öffnung (49) in die Mischkammer (54), wo auch das Warmwasser vom Warmwasserzulauf (3) durch die Öffnung (50) eintritt und sich dort vermischt, um durch den Wasserauslauf (67) auszufließen.

Der Wasserauslauf (67) ist durch den Schlitz (56) derart geführt, daß die Kugel (47) nur um die erste Achse (53) schwenken kann. Ein Verdrehen des Wasserauslaufes (67) im Führungsschlitz (56) kann dann die Drehung des weiteren Regelelementes (64) um die zweite Achse (57), um derart die Mischtemperatur zu bestimmen.

Die Größe des Schwenkwinkels um die erste Achse (53) ist durch die Länge des Führungsschlitzes (56) gegeben. Für die Begrenzung des Drehwinkels um die zweite Achse (57) sorgen Anschläge, die vorteilhafterweise im Bereich des Führungsschlitzes oder am Regelelement (64) angeordnet sind.

Der Wasserauslauf (67) ist um die erste Achse (53) schwenkbar und um die zweite Achse (57) drehbar und bringt durch Schwenken die Öffnungen (49 und 50) gegensinnig mehr oder weniger mit dem Kalt- bzw. Warmwasserauslauf zur Überdeckung.

Die Fig. 12 zeigt eine Variante einer erfindungsgemäßen Mischarmatur mit einer Kugel (47), wobei als Einstellgriff der Wasserauslauf (67) vorgesehen ist. Zum Ausschalten wird der Wasserauslauf (67) in die Lage (68) gebracht.

Die Fig. 12 zeigt in diesem Fall ein weiteres zylindrisches, in der Kugel (47) angeordnetes Regelelement (64), welches starr mit dem Wasserauslauf (67) verbunden ist. Hierbei ist die Kugel (47) nur um die Achse (53) schwenkbar und durch einen Ansatz, der im Führungsschlitz (56) gleitet, gegen jede andere Verdrehung gesichert.

Das hülsenförmige zylindrische Regelelement (64) ist in der Kugel (47) um die Achse (57) drehbar und besitzt Öffnungen (70), die mit korrespondierenden Öffnungen (71) der Kugel, gegensinnig, mehr oder weniger zur Deckung gebracht werden können, um das Mischungsverhältnis von Kalt- und Warmwasser zu verändern. Die Anordnung eines zylindrischen Regelelementes (64) hat den Vorteil einer leichteren Berechenbarkeit und Linearität der Regeleinstellung. Auch die Bearbeitung eines einfachen Zylinders kann die Herstellung rationalisieren.

**Patentansprüche**

1. Grifflose Mischarmatur aus Metall oder Kunststoff, bestehend aus einem Ventilkörper (1), mindestens je einer Zuleitung für Kalt- und Warmwasser (2, 3), zwei Regelelementen (4, 5) zur Regelung von Wassermenge und der Mischtemperatur des auslaufenden Wassers und einem, um eine oder zwei Achsen schwenkbaren Wasserauslauf (6) zur Betätigung der Regelelemente, dadurch gekennzeichnet, daß die Regelelemente (4, 5) im wesentlichen zylindrische Formen, wahlweise mit etwas Konizität, besitzen und das erste Regelelement (4), welches der Wassermengenregelung dient, einseitig geschlossen und mit der offenen Seite in den Ventilkörper eingesetzt ist und das zweite Regelelement (5), welches der Regelung der Mischtemperatur dient, quer in das erste Regelelement (4) eingesetzt ist, wobei es sich am Ventilkörper (1) abstützt und damit die Lage des ersten Regelelementes (4) im Ventilkörper (1) bestimmt und das zweite Regelelement (5) seinerseits von einer Sicherung (8) in seiner Lage gehalten wird.

2. Mischarmatur nach Anspruch 1, dadurch gekennzeichnet, daß das zweite Regelelement (5) mit dem schwenkbaren Wasserauslauf (6) starr oder formschlüssig verbunden ist.

3. Mischarmatur nach Anspruch 2, dadurch gekennzeichnet, daß die Formschlüssigkeit zwischen dem zweiten Regelelement (5) und dem schwenkbaren Wasserauslauf (6) einen Freiwinkel besitzt.

4. Mischarmatur nach Anspruch 1, dadurch gekennzeichnet, daß das erste Regelelement (4) weitere Steueröffnungen (10) besitzt, die mit Gegenöffnungen (11) im Ventilkörper (1) korrespondieren.

5. Mischarmatur nach Anspruch 1, dadurch gekennzeichnet, daß die Drehbewegung des ersten Regelelementes (4) im Ventilkörper (1) in mindestens einer Position gerastet ist.

6. Mischarmatur nach einem oder mehreren der vorstehenden Ansprüche, dadurch gekennzeichnet, daß im Ventilkörper (1) zumindest ein weiterers, unabhängiges und mit einem Betätigungsgriff (15) bedienbares Regelelement (14) angeordnet ist, das keinen Einfluß auf die Mischfunktion der Armatur hat.

7. Mischarmatur nach Anspruch 6, dadurch gekennzeichnet, daß ein oder mehrere unabhängige Regelelemente (14), im Ventilkörper (1) mit der Kalt- oder der Warmwasserzuleitung (2 oder 3) verbunden sind.

8. Mischarmatur nach Anspruch 6, dadurch gekennzeichnet, daß das Regelelement (14) ein drehbarer Zylinder mit Öffnungen (16) ist, die mit korrespondierenden Öffnungen (17) im Ventilkörper (1) durch Verdrehung zur Deckung gebracht werden können.

9. Mischarmatur nach Anspruch 6, dadurch gekennzeichnet, daß zwei Regelelemente (14) in einer durchgehenden Bohrung (18) angeordnet sind, welche eine der Zuleitungen (2 oder 3) anschneidet.

10. Grifflose Mischarmatur aus Metall oder Kunststoff, bestehend aus einem Ventilkörper (41), mindestens je einer Zuleitung für Kalt- und Warmwasser (2, 3) und einer drehbar gelagerten Kugel (47) als erstes Regelelement zur Regelung der Wassermenge, bei dessen Drehung um eine erste Achse die Zuleitung für Kalt- und Warmwasser im Ventilkörper gleichsinnig überdeckt werden, und einem um eine oder zwei Achsen schwenkbaren Wasserauslauf (67) zur Betätigung der Regelelemente, dadurch gekennzeichnet, daß in der Kugel (47) ein weiteres zylindrisches Regelelement (64) vorgesehen ist, bei dessen Drehung um eine zweite Achse (57), die Zuleitungsquerschnitte für Kalt- und Warmwasser gemäß der Wassertemperatur sich gegensinnig verändern.

11. Vorrichtung nach Anspruch 10, dadurch gekennzeichnet, daß der Wasserauslauf (67) mit der Kugel (47) und dem weiteren Regelelement (64) verbunden ist.

12. Vorrichtung nach Anspruch 10, dadurch gekennzeichnet, daß die Kugel (47) bzw. der Körper mit Kugelfläche, in einem Gehäuse (55) gelagert und der Wasserauslauf (67) in einem, etwa einem Großkreis der Kugel (47) folgenden Führungsschlitz (56) des Gehäuses (55) derart geführt ist, daß die Kugel (47) um die erste Achse (53) schwenkt, wobei ein Verdrehen des Wasserauslaufes (67) im Führungsschlitz (56) das weitere Regelelement (64) um die zweite Achse (57) dreht.

13. Vorrichtung nach Anspruch 10, dadurch gekennzeichnet, daß im Bereich des Führungsschlitzes (56), und/oder des weiteren Regelelementes (64), Anschläge vorhanden sind, die den Drehwinkel des Wasserauslaufs (67) um die zweite Achse (57) begrenzen.

## Claims

1. Handleless mixer fitting of metal or plastics material, comprising a valve body (1), at least one feed passage each (2, 3) for cold and hot water, two control elements (4, 5) for controlling the quantity of water and the mixing temperature of the outflowing water and a water outlet (6) swivellable around one or two axes for actuation of the control elements, characterized in that the control elements (4, 5) have a substantially cylindrical shape with, for choice, some degree of taper and the first control element (4), which serves to control the quantity of water is closed at one side with the open side inserted into the valve body and the second control element (5) which serves to control the mixing temperature is inserted transversely into the first control element (4), wherein it is supported on the valve body (1) and thereby determines the position of the first control element (4) in the valve body (1) and the second control element (5) for its part is held in its position by a securing means (8).

2. Mixer fitting according to claim 1, characterized in that the second control element (5) is connected in a rigid or form locked manner to the swivellable water outlet (6).

3. Mixer fitting according to claim 2, characterized in that the form locking between the second control element (5) and the swivellable water outlet (6) has a clearance angle.

4. Mixer fitting according to claim 1, characterized in that the first control element (4) has further control apertures (10) which correspond to matching apertures (11) in the valve body (1).

5. Mixer fitting according to claim 1, characterized in that the rotary displacement of the first control element (4) in the valve body (1) is arrested at least at one position.

6. Mixer fitting according to one or more of the preceding claims, characterized in that there is arranged in the valve body, at least one further, independent control element (14), operable by an operating handle (15), which has no effect on the mixing action of the fitting.

7. Mixer fitting according to claim 6, characterized in that one or more independent control elements (14) are connected to the cold or the hot water feed channel (2 or 3) in the valve body (1).

8. Mixer fitting according to claim 6, characterized in that the control element (14) is a rotatable cylinder with apertures (16) which may by turning be placed in register with corresponding apertures (17) in the valve body.

9. Mixer fitting according to claim 6, characterized in that two control elements (14) are arranged in a throughbore (18) which intersects one of the feed passages (2 or 3).

10. Handleless mixer fitting of metal or plastics material, comprising a valve body (41), at least one feed passage (2, 3) each for cold and hot water and a rotatably mounted ball (47) as a first control element for controlling the quantity of water upon rotation of which around a first axis the feed passages for cold and hot water within the valve body are covered to the same effect and a water outlet (67) swivellable around one or two axes for actuation of the control elements, characterized in that in the ball (47) is provided a further, cylindrical, control element (64) upon rotation of which around a second axis (57) the feed cross-sections for cold and hot water are varied in opposite ways as a function of the water temperature.

11. Device according to claim 10, characterized in that the water spout (67) is connected to the ball (47) and to the further control element (64).

12. Device according to claim 10, characterized in that the ball (47) or element having a spherical surface, is installed in a housing (55) and the water outlet (67) is guided in a guide slot (56) approximately following a great circle of the ball (47) in such a way that the ball (47) pivots around a first axis (53) whereby rotating the water outlet (67) in the guide slot (56) turns the further controlelement (64) around the second axis (57).

13. Device according to claim 10, characterized in that stops which limit the angle of rotation of the water spout (67) around the second axis (57) are present in the region of the guide slot (56) and/or of the further control element (64).

## Revendications

1. Robinet mélangeur sans poignée, en métal ou en matière plastique, comportant un corps de soupape (1), ou moins deux conduites d'alimentation (2, 3) respectivement pour l'eau froide et l'eau chaude, deux éléments de réglage (4, 5) pour régler une quantité d'eau et la température de mélange de l'eau qui s'écoule, et un bec d'écoulement d'eau (6) apte à pivoter autour d'un ou deux axes pour actionner les éléments de réglage, caractérisé en ce que les éléments de réglage (4, 5) ont une forme sensiblement cylindrique présentant facultativement une espèce de conicité, le premier élément de réglage (4) qui sert à régler une quantité d'eau, étant fermé d'un côté et logé dans le corps de soupape par son côté ouvert, tandis que le second élément de réglage (5) qui sert à régler la température de mélange, est logé transversalement dans le premier élément de réglage (4), pour ainsi s'appuyer contre le corps de soupape (1) et déterminer, par conséquent, la position du premier élément de réglage (4) dans le corps de soupape (1), le second élément de réglage (5) étant, pour sa part, maintenu dans sa position par un dispositif de sécurité (8).

2. Robinet mélangeur selon la revendication 1, caractérisé en ce que le second élément de réglage (5) est relié d'une manière rigide ou par complémentarité de forme au bec d'écoulement d'eau pivotant (6).

3. Robinet mélangeur selon la revendication 2, caractérisé en ce que l'assemblage par complémentarité de forme entre le second élément de réglage (5) et le bec d'écoulement d'eau pivotant (6) présente un angle de dépouille.

4. Robinet mélangeur selon la revendication 1, caractérisé en ce que le premier élément de réglage (4) possède d'autres orifices de commande (10) correspondant à des orifices antagonistes (11) prévus dans le corps de soupape (1).

5. Robinet mélangeur selon la revendication 1, caractérisé en ce que le mouvement de rotation du premier élément de réglage (4) dans le corps de soupape (1) est bloqué dans au moins une position.

6. Robinet mélangeur selon une ou plusieurs des revendications précédentes, caractérisé en ce qu'il est prévu dans le corps de soupape (1) au moins un autre élément de réglage (14) indépendant et manœuvrable à l'aide d'une poignée d'actionnement (15), qui n'a aucune influence sur la fonction de mélange du robinet.

7. Robinet mélangeur selon la revendication 6, caractérisé en ce qu'un ou plusieurs éléments de réglage (14) indépendants sont reliés à la conduite d'alimentation d'eau froide ou d'eau chaude (2 ou 3) dans le corps de soupape (1).

8. Robinet mélangeur selon la revendication 6, caractérisé en ce que l'élément de réglage (14) est un cylindre mobile en rotation comportant des orifices (16) qui peuvent être amenés, grâce à une rotation, à coïncider avec des orifices (17) correspondants prévus dans le corps de soupape (1).

9. Robinet mélangeur selon la revendication 6, caractérisé en ce qu'il est prévu deux éléments de réglage (14) dans un perçage traversant (18) qui entame l'une des conduites d'alimentation (2 ou 3).

10. Robinet mélangeur sans poignée, en métal ou en matière plastique, comportant un corps de soupape (41), au moins deux conduites d'alimentation (2, 3) respectivement pour l'eau froide et l'eau chaude, et, comme premier élément de réglage pour régler la quantité d'eau, une bille (47) logée rotative, dont la rotation autour d'un premier axe fait que les conduites d'alimentation pour l'eau froide et l'eau chaude sont recouvertes dans le même sens dans le corps de soupape, ainsi qu'un bec d'écoulement d'eau (67) apte à pivoter autour d'un ou deux axes pour actionner les éléments de réglage, caractérisé en ce que, dans la bille (47), il est prévu un autre élément de réglage cylindrique (64) dont la rotation autour d'un second axe (57) fait que les sections transversales de conduites d'alimentation pour l'eau froide et l'eau chaude varient en sens inverse selon la température de l'eau.

11. Dispositif selon la revendication 10, caractérisé en ce que le bec d'écoulement d'eau (67) est relié à la bille (47) et à l'autre élément de réglage (64).

12. Dispositif selon la revendication 10, caractérisé en ce que la bille (47), respectivement le corps présentant une surface sphérique, est logée dans un logement (55), tandis que le bec d'écoulement d'eau (67) est guidé dans une rainure de guidage (56) du logement (55), qui suit approximativement un grand cercle de la bille (47), de sorte que la bille (47) pivote autour du premier axe (53), une rotation du bec d'écoulement d'eau (67) dans la rainure de guidage (56) faisant tourner l'autre élément de réglage (67) autour du second axe (57).

13. Dispositif selon la revendication 10, caractérisé en ce que, dans la zone de la rainure de guidage (56) et/ou de l'autre élément de réglage (64), il est prévu des butées qui délimitent l'angle de rotation du bec d'écoulement d'eau (67) autour du second axe (57).

EP 0197382 B1

FIG 2

FIG 1

FIG 3

FIG 4

FIG 5

FIG 6

FIG 7

FIG 8

FIG 10

FIG 9

FIG 11

FIG 12